Europäisches Patentamt

European Patent Office

Office européen des brevets

(19)

(11) Publication number: **0 039 615**
**B1**

(12) **EUROPEAN PATENT SPECIFICATION**

(45) Date of publication of patent specification: **01.08.84**

(51) Int. Cl.³: **F 16 B 5/02**

(21) Application number: **81301973.4**

(22) Date of filing: **05.05.81**

(54) **A clamping device.**

(30) Priority: **05.05.80 ZA 802677**

(43) Date of publication of application:
**11.11.81 Bulletin 81/45**

(45) Publication of the grant of the patent:
**01.08.84 Bulletin 84/31**

(84) Designated Contracting States:
**AT BE CH DE FR GB IT LI LU NL SE**

(56) References cited:
**AT - B - 83 610**
**CH - A - 44 473**
**CH - A - 125 679**
**CH - A - 330 061**
**DE - A - 1 900 455**
**DE - C - 395 787**
**DE - U - 1 910 187**
**DE - U - 1 928 205**
**FR - A - 775 086**
**US - A - 1 795 525**
**US - A - 2 807 834**

(73) Proprietor: **Anglo American Corporation of South Africa Limited**
**44 Main Street**
**Johannesburg Transvaal (ZA)**

(72) Inventor: **Armstrong, Gavin Campbell**
**11 Lodge Road**
**Kimberley Cape Province (ZA)**

(74) Representative: **Abbie, Andrew Kenneth**
**A.A. THORNTON & CO. Northumberland House**
**303/306 High Holborn**
**London, WC1V 7LE (GB)**

Courier Press, Leamington Spa, England.

# Description

This invention relates to a device for clamping together two members which may meet at a variety of angles.

A number of clamping methods are in use, but often require fairly involved workshop procedures to prepare components for the task, especially where the members to be connected meet at unusual angles. Tolerances in the manufacture of plates and the drilling of bolt holes are often critical. Further, in some bolted connections, access to all sides of the connection may be necessary for the threading of nuts, or the insertion of bolts. One example of a device for clamping together two members in abutting relationship by means of angle brackets and screws is described in DE—C—395 787.

It is an object of the invention to provide a clamping device which may be used in a variety of situations, and which is simple in manufacture and operation.

According to the present invention, there is provided a clamping device for clamping together first and second members in abutting relationship by means of angle brackets located on the members with each bracket having on one flange a headed stud protruding from it for engagement with an undercut hole on a member and screw means for drawing the other two flanges of the brackets together when the brackets are positioned on the members with the other flanges facing one another.

In the case of tubular members the drilling of a hole provides an automatic undercut.

The device of the invention is particularly useful for joining square tubes together.

In order that the invention may be well understood an embodiment thereof, which is given by way of example only, and some applications of the embodiment will now be described with reference to the accompanying drawings, in which:

Figure 1 shows a perspective view of a clamping device according to the invention;

Figures 2, 3, 4, 5 and 6 show various applications of the clamping device, figure 6 being a view in the direction of the arrow 6 in Figure 5; and

Figure 7 shows a clamping device in use for connecting two panels in edge to edge relationship.

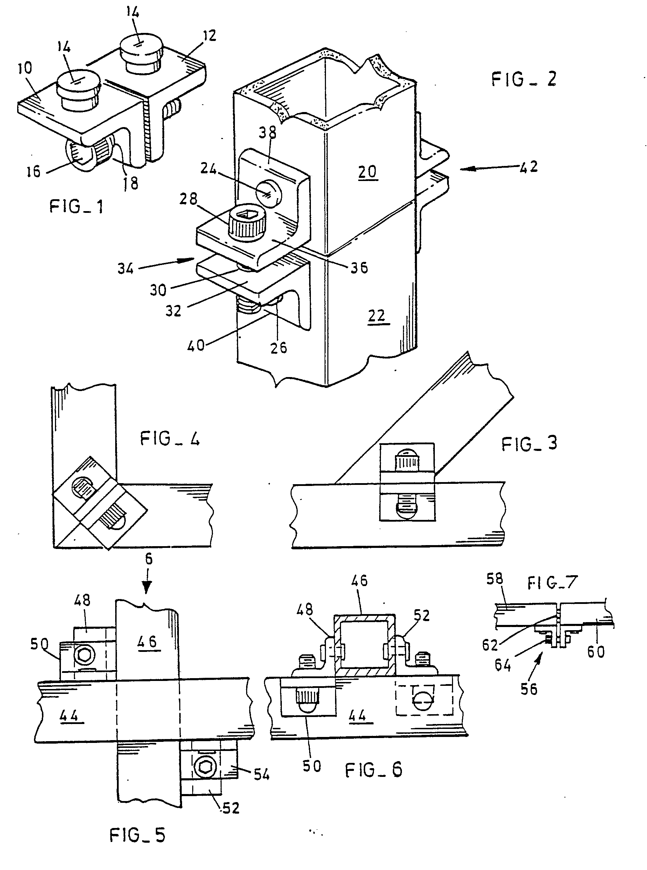

As shown in Figure 1, a clamping device has a first clamping element 10, and a second clamping element 12. Each clamping element is a short length of angle iron, and each has a stud 14 protruding from one leg of the angle iron.

An Allen screw 16 passes loosely through an aperture 18 in the first clamping element 10, and engages with a threaded hole in the second clamping element 12.

The studs 14 are headed, as shown in Figure 1, for engagement of the studs in holes in hollow square sections. The operation of the clamping device is described with reference to Figure 2, in which two square tubular members 20 and 22 are connected in end to end relationship.

The members 20 and 22 are placed loosely in end to end relationship, and studs 24 and 26 are located in holes in the members 20 and 22 respectively. The Allen screw 28 is engaged with the hole 30 in the clamping element 32, thereby bringing the studs 24 and 26 closer together, clamping the members 20 and 22 to one another.

Suitable shims may be placed in the space 34 between the clamping elements 32 and 36, should the ends 38 and 40 of the clamping elements lift during the turning of the Allen screw 28.

The connection of the members 20 and 22 may be strengthened by the provision of a second clamping device 42.

Figures 3 and 4 show clamping devices in use for the connection of members meeting at an angle. Again each connection may be strengthened by the provision of a further clamping device on the far side.

Figures 5 and 6 demonstrate the versatility of the invention. In this case, two members 44 and 46 meet in a crossed relationship, and the clamping element 48 (or 52) has been turned through a right angle with respect to the clamping element 50 (or 54).

Figure 7 shows a single clamping device 56 in use for connecting two panels 58 and 60, where access to only one side of the panels is possible or desirable. A sealed joint may be formed between the panels 58 and 60 by the provision of a strip of a suitable elastomer 62, which is compressed during the turning of the Allen screw 64.

The invention thus provides a clamping device which finds application in the jointing of members meeting at a variety of angles. The members may meet in the same plane, or may be in crossed relationship.

Further, figure 7 illustrates an application of the invention where access to only one side of the members is desirable.

In all cases, the clamping device is simple and quick to use, and it will be appreciated that a degree of flexibility in the positioning of holes or in the members can be tolerated.

## Claim

A device for clamping together first and second members (20, 22) in abutting relationship by means of angle brackets (10, 12) located with one of their flanges on the members and screw means (10) for drawing the other two flanges together when the brackets are positioned on the members with these flanges facing one another characterised in that each bracket has on one flange a headed stud (14) protruding from it for engagement with an undercut hole on the respective member.

## Revendication

Un dispositif pour assembler par serrage des premier et second élements appuyés l'un contre l'autre par l'intermédiaire de console à équerre (10—12) dont une des branches est placée sur les éléments et par l'intermédiaire d'un système à vis (10) destiné à rapprocher les deux autres branches quand les consoles sont positionnées sur les éléments avec ces branches se faisant face, caractérisé en ce que chaque console possède sur une branche un tenon à tête (14) en saillie sur cette branche de façon à pouvoir s'engager dans un trou avec sous-cave pratiqué dans l'élément correspondant.

## Patentansprüch

Vorrichtung zum Zusammenklemmen eines ersten und eines zweiten Teiles (20, 22) in gegenseitiger Anlage mit Hilfe von Winkelstrücken (10, 12), die mit einem ihrer Flansche gegen die Teile anliegen und von Schrauben (16), die die beiden anderen Flansche zusammenspannen, wenn die Stücke auf den Teilen so angeordnet sind, daß diese Flansche einander gegenüberliegen, dadurch gekennzeichnet, daß jedes Stück auf einem Flansch einen Kopfbolzen (14) aufweist, der zum Zusammengriff mit einem hinterschnittenen Loch in dem jeweiligen Teil von dem Flansch absteht.

FIG_1

FIG_2

FIG_4

FIG_3

FIG_5

FIG_6

FIG_7